# EUROPEAN PATENT APPLICATION

(11) **EP 1 496 638 A2**
(43) Date of publication of application: **12.01.2005**
(21) Application number: 04007776.0
(22) Date of filing: 31.03.2004
(51) Int. Cl.: H04L 1/18

(54) **Packet transceiver apparatus using retransmissions and adaptive modulation**

(30) Priority: 10.07.2003 JP 2003194823
(71) Applicant: FUJITSU LIMITED, Kawasaki-shi, Kanagawa 211-8588 (JP)
(72) Inventor: Tanaka, Yoshinori, Fujitsu Limited, Kawasaki-shi, Kanagawa 211-8588 (JP); Seki, Hiroyuki, Fujitsu Limited, Kawasaki-shi, Kanagawa 211-8588 (JP); Takeo, Kohji, Mobile Techno Corp., Kawasaki-shi, Kanagawa 211-0041 (JP)
(74) Representative: Kreutzer, Ulrich, Dipl.-Phys.

(57) **Abstract**

Disclosed is a packet receiving apparatus in a communication system for transmitting a packet signal upon changing over a parameter of a transmit signal in accordance with conditions of a propagation path, and, when the packet signal cannot be received correctly on a receiving side, retransmitting the packet signal, combining the packet data received previously and the retransmitted packet data and executing decode processing based upon the combined packet data. The receiving apparatus is such that if the propagation path conditions at the time of retransmission are inferior, part of the packet data extracted from a buffer is cut out and combined with a retransmission packet and decode processing is executed based upon the result of combining. If the propagation path conditions at the time of retransmission are superior, data of a plurality of packets to undergo retransmission combining is extracted from the buffer, the extracted data is combined with part of a retransmission packet and decode processing is executed based upon the result of combining.

## Description

### BACKGROUND OF THE INVENTION

This invention relates to a packet transceiver apparatus in a communication system and, more particularly, to a packet transceiver apparatus for transmitting packets efficiently in accordance with the conditions of the propagation path in a mobile communication system that transmits packets.

There is growing demand for Internet services that employ mobile communication systems. Packet transmission schemes are suitable as means for the efficient transmission of signals having various qualities and transmission rates. In particular, efficient transmission of large quantities of data on the downlink from the base station to each of the mobile stations is desired. Packet transmission is characterized in that a signal is transmitted only when user data is generated and in that a channel can be shared by multiple users. Radio resources can therefore be used efficiently. Adaptive modulation, scheduling and retransmission also are available as means for performing efficient transmission.

### (a) Adaptive modulation

Since a radio propagation path changes from moment to moment, signal transmission that has been made to conform to the conditions of the propagation path becomes necessary. A method of controlling transmission power is one example. If the conditions of the propagation path are poor, transmission power is increased to assure that the reception quality at the receiving station will attain a certain level. However, since the transmission power varies in this scheme, the interference characteristic in relation to other receiving stations or adjacent cells also may vary.

Accordingly, another approach is to hold the transmission power constant and change a modulation parameters (the data modulation scheme, encoding rate or spreading factor, etc.) in conformity with the conditions of the propagation path. This method is referred to as adaptive modulation or adaptive demodulation. In general, data is modulated and subjected to error correction by a variety of multivalued modulation schemes. The larger the number of multiple values in the data modulation scheme, or the closer an encoding rate R in error correction is to unity, the greater the quantity of data transmitted at one time and, as a consequence, the less resistant the system is to transmission error. If the conditions of the propagation path are good, the quantity of transmitted data is increased and the transmission throughput raised by increasing the number of multiple values and making the encoding rate approach unity. Conversely, if the conditions of the propagation path are poor, the quantity of data transmitted can be reduced and a rise in transmission error rate prevented by decreasing the number of multiple values and lowering the encoding rate. In a system that subjects data to frequency spreading, as is the case with code division multiple access (CDMA), the signal spreading factor (also referred to as "process gain") can be adopted as the modulation parameter. By changing the modulation parameter in accordance with the conditions of the propagation path, signal transmission that matches the conditions of the propagation path can be performed and, as a result, a rise in the transmission error rate can be suppressed and efficient transmission becomes possible.

### (b) Scheduler

In a mobile communication system, allocating radio resources to users efficiently is important when transmitting signals to a plurality of users in a cell. More specifically, what must be decided is which user packet (there are cases where one user is transmitting and cases where multiple users are transmitting simultaneously) is to be transmitted at what time, on what channel, with what power and with what packet length. The means for performing this operation is referred to as a "scheduler". The scheduler allocates radio resources to each user based upon various information. The information includes the conditions of the propagation path for each user, the priority from user to user, the data occurrence frequency and the amount of data. Which information is used differs depending upon the system. What part of radio resources is to be allocated and what standard is to be used in making the allocation also differ depending upon the system. In order to maximize quantity of transmission in the entire system or in a cell, users for whom the conditions of the propagation path are best (generally users closest to the base station) are selected and all resources are allocated. Further, opportunity to transmit is allocated equally in order to maintain fairness among the users. (Refer to The Institute of Electronics, Information and Communication Engineers, Technical Report RCS2001-291, "Comparison of characteristics in scheduling methods focused upon throughput of each user in downlink high-speed packet access" by Ofuji, et al.).

### (c) Retransmission scheme

A retransmission scheme for retransmitting packets that have failed to be received is available. A receiving station determines whether information in a received packet has been decoded accurately or not and notifies the transmitting side of reception success/failure (ACK/NACK). The information in the transmitted packet is stored in a buffer at the transmitting station and, if notification of reception failure is received, the transmitting station retransmits this packet. If the transmitting station is notified of successful reception, the transmitting station discards this packet of data from within the buffer. In case of communication of data or communication over the Internet, some delay is allowed but reliability is sought. In the case of such traffic, communication with little discarding of packets can be carried out by enlarging the maximum number of retransmissions. On the other hand, in case that assumes realtime traffic such as a telephone conversation, maximum number of retransmissions can be reduced on the grounds that some discarding of packets can be allowed. Furthermore, there is a method of combining data on the receiving side in order to improve reception quality of a retransmitted signal. Data in a packet whose reception has failed and that includes an error calling for a retransmission request (NACK information) is stored in a buffer on the receiving side. When the retransmitted packet is received, the receiving side combines the data in the buffer with the retransmitted data. By virtue of such combining of data, reception quality is improved. The more the number of retransmissions is increased, the higher the degree of improvement and the higher the success rate of packet reception.

In a packet transmission system for mobile communication, radio resources are used efficiently by employing the above-described techniques and it is possible to perform packet transmission that conforms to each user or to the nature of traffic and that is in line with the goals of the system provider.

### (d) Packet transmission system according to the prior art

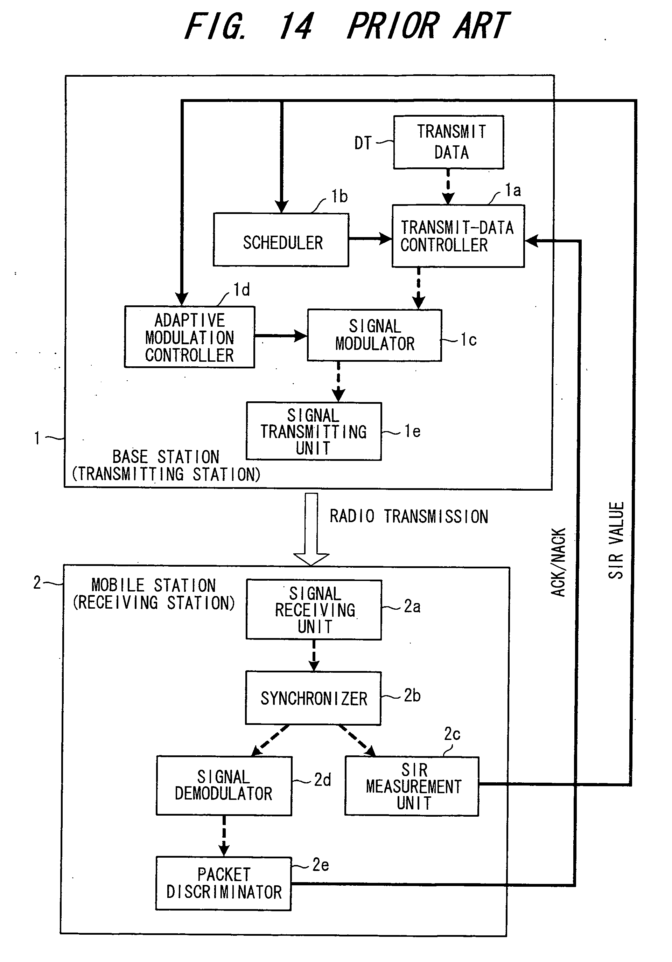

Fig. 14 illustrates an example of a packet transmission system according to the prior art. Assume transmission on a downlink from a base station (transmitting station) 1 to a mobile station (receiving station) 2. Assume that the mobile station 2 constantly monitors the conditions of the downlink propagation path and reports this to the base station in the form of a SIR value. The dashed lines in Fig. 14 indicate the flow of data signals and the solid lines indicate the flow of control signals. Transmit data DT (data that is actually sent in via a network) generated on a per-mobile-station basis is accumulated in a signal buffer within a transmit-data controller 1 a at one time. Implementations of the signal buffer include one in which retransmitted data and new data are kept separate from each other, one in which these items of data are kept together, and one in which these items of data are kept separate or kept together depending upon the type of traffic. On the basis of information such as the SIR value, a scheduler 1 b selects the user whose packet is to be transmitted next and so notifies the transmit-data controller 1 a. In accordance with the user information reported, the transmit-data controller 1 a transmits the transmit-signal data of this user, which is located in the signal buffer, to a signal modulator 1c. On the basis of the SIR value, an adaptive modulation controller 1d calculates modulation parameters suited to each user and reports the parameters to the signal modulator 1c. The latter uses the reported modulation parameters to perform signal modulation and transmits signals wirelessly through a signal transmitting unit 1 e.

The mobile station 2 has a signal receiving unit 2a for receiving a signal that has been transmitted from the base station and sending this signal to a synchronizer 2b. The latter executes synchronization processing. A SIR measurement unit 2c performs SIR measurement and reports the SIR value to the base station 1. A signal transmitted constantly by the base station 1, such as a pilot signal, is used in SIR measurement. A signal demodulator 2d demodulates the signal of a receive packet, and a packet discriminator 2e subsequently discriminates the packet, reports ACK to the transmitting station if packet reception has succeeded and reports NACK to the transmitting station if packet reception has failed.

The above description relates to a case where a SIR value has been transmitted from the receiving side. However, there is also prior art (JP 2002-204278A) for acquiring delay information or packet failure rate, sending this to the transmitting side and controlling the parameters of transmit data, and prior art (JP 2000-261496A) for variably setting parameters, which stipulate the transmission procedure, based upon quality.

### (e) Signal modulator on transmitting side

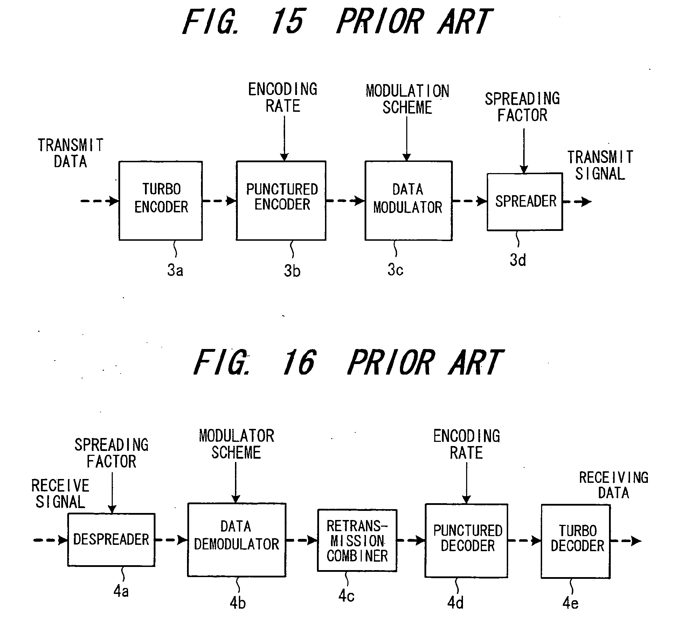

Fig. 15 illustrates the structure of the signal modulator 1c on the transmitting side. Because the structure differs depending upon the communication scheme, this illustrates one example. Assume that the encoding rate and spreading factor of the modulation scheme are given as the modulation parameters. The transmit data is subjected to error correcting encoding by turbo encoding in a turbo encoder 3a. Here the encoding rate is assumed to be constant at all times. A punctured encoder 3b achieves the required encoding rate using a punctured code pattern. A data modulator 3c performs data modulation that is in accordance with the modulation scheme (number of multiple values). In general, the modulation scheme is QPSK, 16-QAM, 64-QAM, etc. A spreader 3d spreads the signal in accordance with the spreading factor. Spreading methods include a method of spreading along the time direction and a method of spreading along the frequency direction.

### (f) Signal demodulator on receiving side

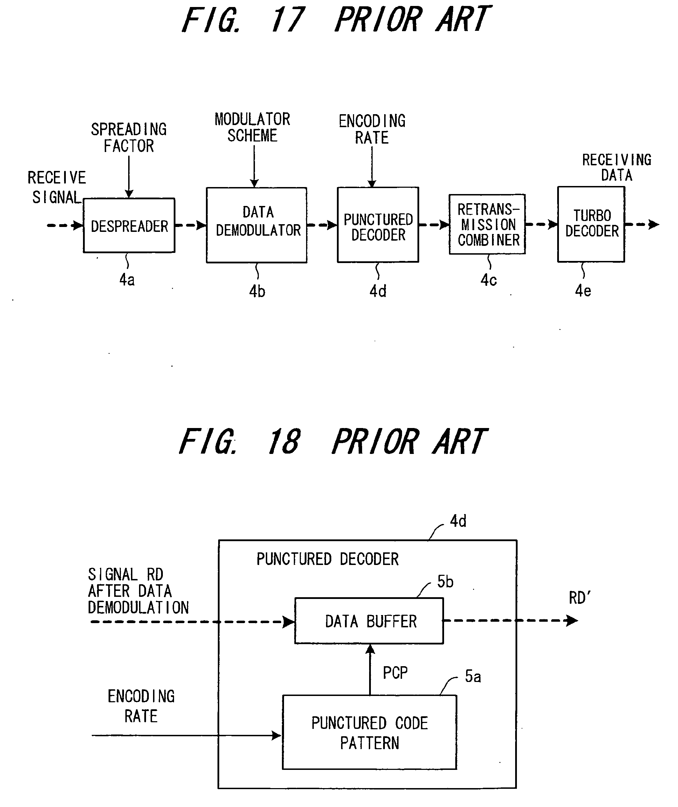

Figs. 16 and 17 illustrate structures of the signal demodulator 2d on the receiving side, in which Fig. 16 illustrates a structure in which retransmission combining is performed before punctured decoding and Fig. 17 a structure in which retransmission combining is performed after punctured decoding. These correspond to Fig. 15. In Figs. 16 and 17, a despreader 4a despreads a receive signal in accordance with the spreading factor. A data demodulator 4b performs data demodulation that conforms to the modulation scheme. If a packet is a retransmission packet, a retransmission combiner 4c executes processing to combine the data of this packet with the data of the same packet received previously. As a result, a higher reception quality can be obtained. Retransmission combining is by (a) an arrangement (Fig. 16) in which combining is performed before punctured decoding and (b) an arrangement (Fig. 17) in which combining is performed after punctured decoding. The buffer structure, etc., in the two arrangements differs. A punctured decoder 4d performs punctured decoding that conforms to the encoding rate, and a turbo decoder 4e performs turbo decoding.

### (g) Punctured decoding

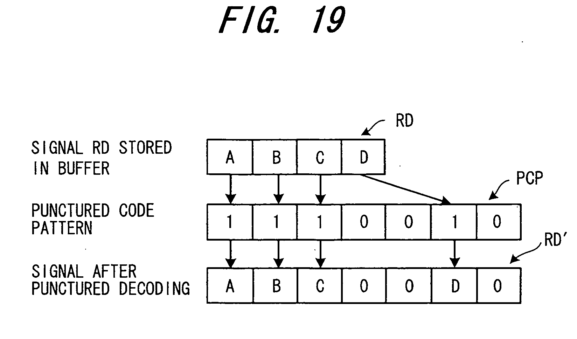

Fig. 18 is a diagram showing the structure of the punctured decoder 4d. This diagram corresponds to Fig. 17. The punctured decoder 4d has a punctured code pattern generator 5a, which generates a punctured code pattern PCP conforming to the encoding rate, and a data buffer 5b. A signal RD obtained after data demodulation is stored in the data buffer 5b in an amount equivalent to the number of code "1"s in the punctured code pattern PCP. The punctured code pattern PCP differs depending upon the encoding rate and therefore the length of the buffer also differs. Fig. 19 illustrates an example of a buffer length of four (the number of "1"s in the punctured code pattern PCP is four). The stored signal RD is written to the positions of code "1"s in the punctured code pattern PCP, and a signal RD' obtained after punctured decoding is output.

It should be noted that besides the three modulation parameters mentioned above, an additional modulation parameter is the number of multicodes in multicode transmission using a plurality of channels. However, a description of this is omitted.

### (h) Structure of receiving side from transmission combiner onward

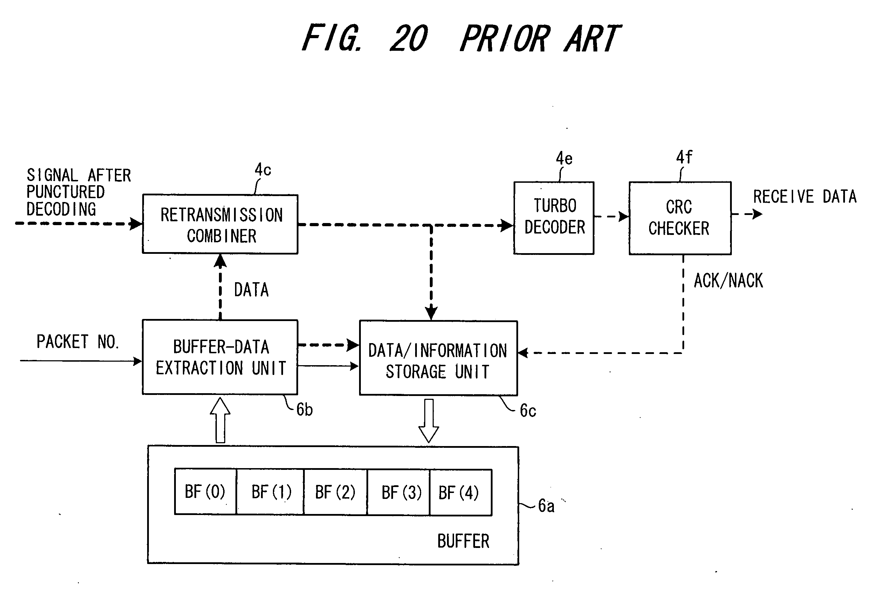

Fig. 20 illustrates the structure of the receiving side from the retransmission combiner onward.

A buffer 6a stores packets whose reception has failed along with the numbers of these packets. A buffer-data extraction unit 6b refers to a packet number and extracts the data of this packet, which is to be combined with a retransmitted packet, from the buffer 6a. If a receive packet (actually the signal obtained as a result of punctured decoding) is not a retransmission packet, i.e., if the receive packet is a new packet, the retransmission combiner 4c inputs the packet to a turbo decoder 4e. If the receive packet is a retransmission packet, then the retransmission combiner 4c combines the data of this packet with packet data read out of the buffer 6a and inputs the combined data to the turbo decoder 4e. The latter applies turbo encoding to the input data. A CRC checking unit 4f executes a CRC checking operation using the decoded data, checks to see whether the data contains an error, outputs the data as receive data and generates an ACK signal if no error is contained, and generates a NACK signal if the data contains an error. If the ACK signal is generated when a retransmission packet is received, a data/information storage unit 6c deletes this packet from the buffer 6a. If the NACK signal is received, the data/information storage unit 6c stores retransmission combination data in the buffer 6a together with the packet number.

### (i) Signal modulation/demodulation

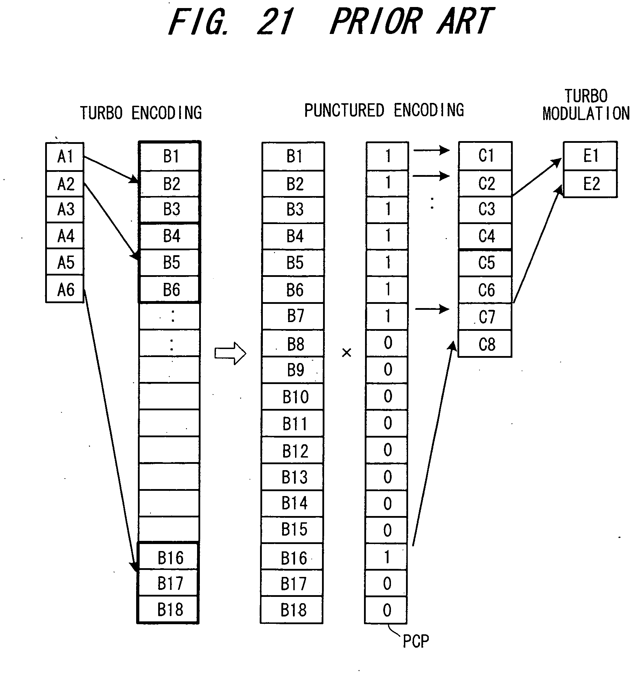

Fig. 21 illustrates an example of signal modulation on the transmitting side. Here it is assumed that the modulation scheme is 16-QAM (four multiple values) and that the encoding rate R is 3/4. Consider 6-bit data A1 to A6, where the transmit data is A. If the encoding rate in a turbo encoder is 1/3, then the encoded data will be B1 to B18. In a punctured code pattern PCP for the encoding rate 3/4, eight of the 18 bits will be code "1". Data B1 to B7 and B16 corresponding to the code "1"s of the punctured code pattern PCP become the data after punctured encoding and this data is output as C1 to C8. Since the 6-bit data becomes 8-bit data, the encoding rate is 3/4. In data modulation, 4-valued multivalue modulation is performed by 16-QAM and data E1, E2 is obtained. The data after such decoding is spread in dependence upon the spreading factor.

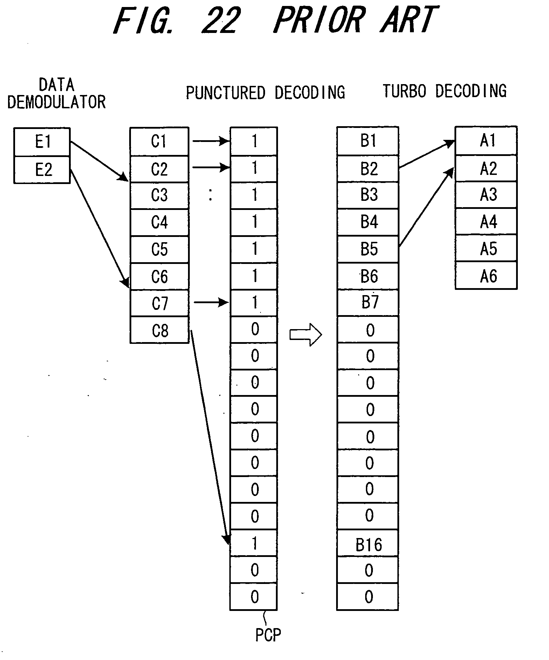

Fig. 22 is an example of signal demodulation on the receiving side. Here the flow is opposite that of Fig. 21. In punctured decoding, data is written to the positions corresponding to the code "1"s of the punctured code pattern PCP. The original 6-bit data A1 to A6 is decoded by applying turbo decode processing to the data that prevails after punctured decoding.

### (j) Retransmission combining

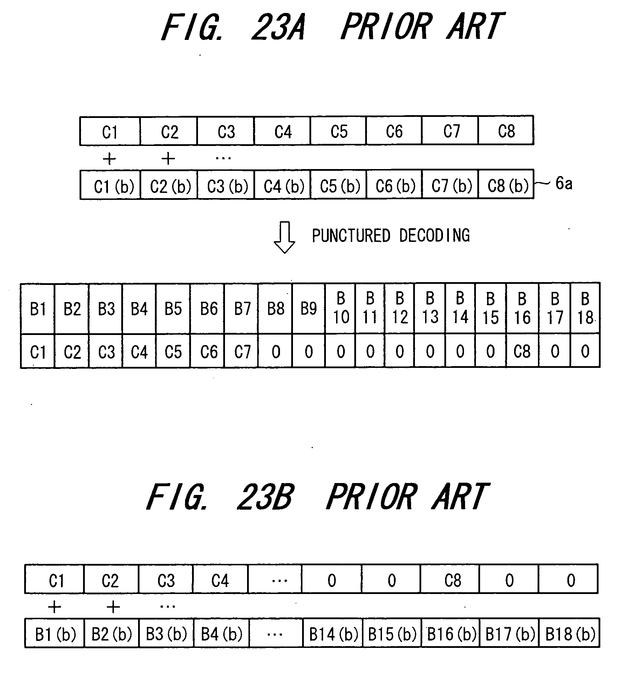

1. Chase combining and 2. IR (Intermittent Redundancy) combining generally are employed as retransmission combining. These two schemes will be described here. Figs. 23A, 23B are diagrams for describing Chase combining, in which Fig. 23A is a diagram useful in describing Chase combining before punctured decoding and Fig. 23B a diagram useful in describing Chase combining after punctured decoding. The symbols are in accordance with the examples described above.

In combining before punctured decoding, data C1 to C8 that has undergone data demodulation is combined with data C1(b) to C8(b) in buffer 6a, as depicted in Fig. 23A. Here C1(b) to C8(b) represent combined values of previously transmitted data of a packet that is the same as the packet currently being received. The combined data is normalized in accordance with the number of retransmissions. That is, if a retransmission is a second retransmission, (i.e., two retransmissions following the initial transmission), the data in the buffer will be a combined value that is the result of two transmissions (the initial transmission + the first retransmission). If the total of this value and the current packet data (the second retransmission) is calculated, the combined value obtained will be the result of three transmissions. This combined value, therefore, is divided by three. The 8-bit data obtained by retransmission and combination is substituted for the positions (B1 to B7, B16) which are the code "1"s in the punctured code pattern PCP (See Fig. 22), punctured decoding is applied and the results are input to the turbo decoder.

In combining after punctured decoding, data C1 to C8 that has undergone data demodulation is substituted for the positions (B1 to B7, B16) which are the code "1"s in the punctured code pattern PCP (See Fig. 22), after which the data is combined with data B1(b) to B18(b) in buffer 6a, as shown in Fig. 23B. Figs. 23A and 23B differ in terms of the buffer structure but the effects are the same.

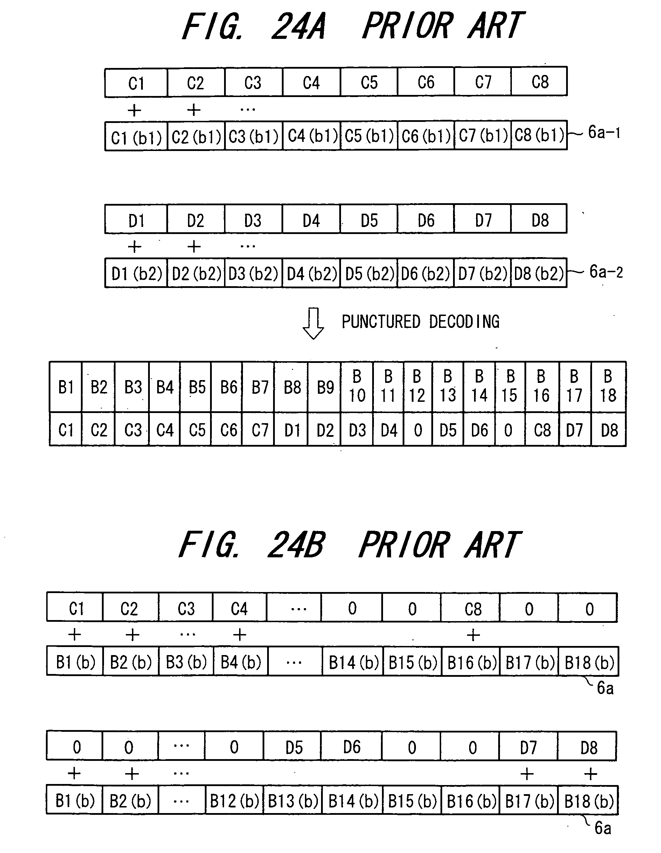

Figs. 24A, 24B are diagrams for describing IR combining, in which Fig. 24A is a diagram useful in describing IR combining before punctured decoding and Fig. 24B a diagram useful in describing IR combining after punctured decoding.

In IR combining, encoding is performed based upon a punctured code pattern that differs for every retransmission. Assume here that the number of patterns is two. In the case of two patterns, the pattern in the initial transmission and the pattern in the first retransmission differ from each other. In the second retransmission, a pattern that is identical with that of the initial transmission is used. Data combining is performed only in cases where an identical pattern is used.

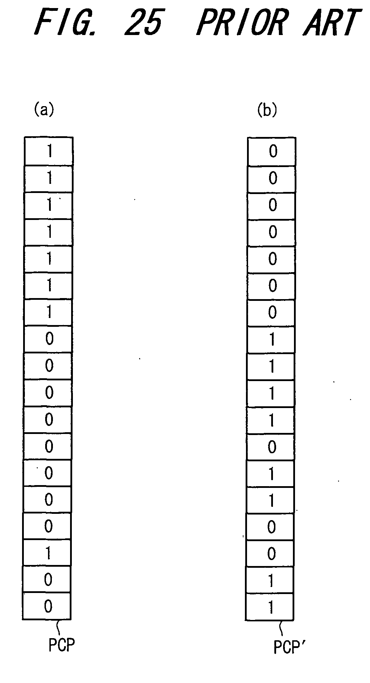

In combining performed before punctured decoding (Fig. 24A), the data transmitted in the initial transmission and in retransmissions 2, 4, 6, ··· has undergone punctured encoding using the same pattern PCP [see (a) in Fig. 25], and therefore the data is combined with data that has been stored in a first buffer 6a-1 and the result is stored in the buffer 6a-1 again. The data transmitted in retransmissions 1, 3, 5, ··· has undergone punctured encoding using a punctured code pattern PCP' [see (b) in Fig. 25] different from the pattern PCP, and therefore the data is combined with data that has been stored in a second buffer 6a-2 and the result is stored in the buffer 6a-2 again. By performing punctured decoding, data is written to positions corresponding to the punctured code patterns PCP, PCP' and undergoes punctured decoding. Here Ci represents the first pattern and Di the second pattern. Data that has undergone punctured decoding is subsequently input to the turbo decoder and undergoes turbo decoding.

In combining performed after punctured decoding (Fig. 24B), data is combined with the data in the buffer 6a after punctured decoding has been applied based upon the patterns PCP, PCP' whenever there is a retransmission. Here data is combined only with data for which the pattern is the same. In the initial transmission and retransmissions 2, 4, 6, ···, data C1 to C8 that has been decoded based upon the first pattern PCP is combined with data [B1(b), B2(b) to B7(b), B16(b)] at the corresponding positions of the buffer 6a. In retransmissions 1, 3, 5, ···, data D1 to D8 that has been decoded based upon the second pattern PCP' is combined with data [B8(b) to B11(b), B13(b), B14(b), B17(b), B18(b)] at the corresponding positions of the buffer 6a. Data that has thus undergone punctured decoding is subsequently input to the turbo decoder and subjected to turbo decoding.

If a packet for which reception has failed is retransmitted in an adaptive modulation scheme in which a signal is transmitted upon changing a modulation parameter in conformity with the conditions of the propagation path, a packet that has undergone signal modulation based upon a modulation parameter identical with that at the time of the initial transmission is transmitted. The reason for this is that packet data at the time of the initial transmission and packet data at the time of the retransmission must be combined on the receiving side. If the modulation parameter were to be changed, the data could not be combined because either the data lengths would differ or the punctured encoding patterns would differ.

The conditions on the propagation path are constantly changing. The fluctuation can be as much as several tens of decibels when travel of the receiving station, shadowing and fading are taken into account. In a case where a number of users are present in a cell, the scheduler may not always transmit a retransmission packet immediately. If multiple retransmissions are performed, a considerable length of time passes from the time of the initial packet transmission. As a consequence, the conditions of the propagation path at the time of the initial transmission and the conditions of the propagation path at the time of retransmission can differ, and it is conceivable that a modulation parameter set at the time of the initial transmission and that suited to the conditions of the propagation path at the time of retransmission will not match.

If a packet that has undergone signal modulation based upon a modulation parameter identical with that which prevailed at the time of initial transmission is transmitted in such case, data reception error will occur or it will no longer be possible to transmit data efficiently. For example, if the conditions of the propagation path initially are better than those at the time of a retransmission, then the quantity of transmit data will be large at the time of the retransmission despite the poor propagation path conditions at this time. A data reception error will result. Conversely, if the conditions of the propagation path initially are worse than those at the time of a retransmission, then the quantity of transmit data will decline despite the fact that conditions allow a large quantity of data to be transmitted. The result is a decline in transmission efficiency.

Accordingly, when a modulation parameter is changed and transmitted in conformity with the conditions of the propagation path prevailing at the time of retransmission, combining with a retransmission signal will no longer be achievable on the side of the receiving station if the modulation parameter at the time of the initial transmission and the modulation parameter at the time of retransmission differ.

### SUMMARY OF THE INVENTION

Accordingly, an object of the present invention is to make possible transmission that matches the conditions of the propagation path even in a case where propagation path conditions at the time of initial transmission of a packet differ from those at the time of retransmission.

Another object of the present invention is to so arrange it that retransmission signal combining can be carried out correctly on the side of the receiving station even if packet data is transmitted according to a modulation scheme conforming to currently prevailing propagation conditions in a case where propagation path conditions at the time of initial transmission of a packet differ from those at the time of retransmission.

A further object of the present invention is to make it possible to prevent repeated packet reception failures, prevent excessive allocation of radio resources and utilize radio resources efficiently.

According to a first embodiment of the present invention, the foregoing objects are attained by providing a packet receiving apparatus in a communication system for transmitting a packet signal upon changing over modulation parameters of a transmit signal in accordance with conditions of a propagation path, and, when the packet signal cannot be received correctly on a receiving side, retransmitting the packet signal, combining the packet data received previously and the retransmitted packet data and executing decode processing based upon the combined packet data. The packet receiving apparatus according to the first embodiment includes buffer means for storing receive packet data, which contains an error, with identifying information appended thereto; means for extracting packet data, which is to undergo retransmission combining, from the buffer upon referring to the identifying information of a retransmission packet; combining means for combining retransmission packet data with the packet data extracted from the buffer; decoding means for executing decode processing based upon the combined packet data; means for discriminating whether result of decoding is correct or erroneous.

In a second embodiment of the present invention, the packet receiving apparatus further includes means for comparing a first modulation parameter (e.g., number of multivalues in data modulation or encoding rate) that has been attached to a retransmission packet signal and a second modulation parameter that has been attached to packet data extracted from the buffer; and means for cutting out part of the packet data, which has been extracted from the buffer, and inputting it to the combining means if result of the comparison is that the conditions of the propagation path at the time of retransmission are inferior.

In a third embodiment of the present invention, the packet receiving apparatus further includes means for comparing a first modulation parameter (e.g., number of multivalues in data modulation or encoding rate) that has been attached to a retransmission packet signal and a second modulation parameter that has been attached to packet data extracted from the buffer; and means for extracting data of a plurality of packets that are to undergo retransmission combining from the buffer and inputting these packets of data to the combining means if result of the comparison is that the conditions of the propagation path at the time of retransmission are superior.

According to a fourth embodiment of the present invention, the foregoing objects are attained by providing a packet transmitting apparatus in a communication system for transmitting a packet signal upon changing over modulation parameters of a transmit signal in accordance with conditions of a propagation path, and, when the packet signal cannot be received correctly on a receiving side, retransmitting the packet signal, combining the retransmitted packet data with the packet data received previously and executing decode processing based upon the combined packet data. The packet transmitting apparatus according to the fourth embodiment includes buffer means for storing a transmitted packet with identifying information and a modulation parameter appended thereto; means for deciding a modulation parameter based upon conditions of the propagation path; and retransmitting means for deleting a packet, for which successful reception has been sent back from a receiving side, from the buffer, and retransmitting a packet, for which reception failure has been sent back from the receiving side, upon attaching identifying information and a modulation parameter prevailing at time of retransmission, with the retransmission being performed based upon a modulation scheme that conforms to this modulation parameter.

In a fifth embodiment of the present invention, the packet transmitting apparatus further includes means for comparing a modulation parameter that has been attached to packet data to be retransmitted and a modulation parameter conforming to the conditions of the propagation path prevailing at the time of retransmission; and means for retransmitting a plurality of packets, which have been stored in the buffer, as a single retransmission packet signal upon attaching respective ones of identifying information of these packets if result of the comparison is that the conditions of the propagation path at the time of retransmission are superior to those that prevailed at the time of the previous transmission.

In a sixth embodiment of the present invention, the packet transmitting apparatus further includes means for comparing a modulation parameter that has been attached to packet data to be retransmitted and a modulation parameter conforming to the conditions of the propagation path prevail at the time of retransmission; and means for retransmitting part of a packet, which has been stored in the buffer, as a single retransmission packet signal upon attaching identifying information if result of the comparison is that the conditions of the propagation path at the time of retransmission are inferior to those that prevailed at the time of the previous transmission.

Thus, the foregoing embodiments are such that even in a case where propagation path conditions at the initial transmission of a packet differ from those at the time of retransmission, a transmission that conforms to the current propagation conditions can be performed by changing the order in which packets are transmitted in such a manner that the modulation parameters will agree, or by changing the modulation parameter and then transmitting the signal.

Further, by comparing packet numbers and comparing modulation parameters on the receiving side, data corresponding to a retransmission packet can be extracted from a buffer and retransmission combining can be carried out, thereby making it possible to prevent repeated packet reception failures, prevent excessive allocation of radio resources and utilize radio resources efficiently.

Other features and advantages of the present invention will be apparent from the following description taken in conjunction with the accompanying drawings.

### BRIEF DESCRIPTION OF THE DRAWINGS

Fig. 1 is a block diagram of retransmission control implemented by a transmitting station in conformity with conditions of a propagation path according to the present invention;
Fig. 2 is a diagram useful in describing transmit data in a signal buffer;
Fig. 3 is a block diagram illustrating the structure on the receiving side from a retransmission combiner onward;
Fig. 4 is a diagram useful in describing a buffer;
Fig. 5 is a diagram useful in describing retransmission combining;
Fig. 6 is a flowchart a retransmission combining processing according to the present invention;
Fig. 7 illustrates an example of packet structure when an initial transmission is made;
Fig. 8 illustrates packet structure in a case where packet data is retransmitted upon lowering the modulation scheme from 16-QAM to QPSK by reason of a deterioration in propagation path conditions at the time of retransmission;
Fig. 9 illustrates an example of packet structure when an initial transmission is made;
Fig. 10 is a diagram (part 1) of packet structure in a case where packet data is retransmitted upon changing the modulation scheme from QPSK to 16-QAM by reason of an improvement in propagation path conditions at the time of retransmission;
Fig. 11 is a diagram (part 2) of packet structure in a case where packet data is retransmitted upon changing the modulation scheme from QPSK to 16-QAM by reason of an improvement in propagation path conditions at the time of retransmission;
Fig. 12 is a diagram useful in describing combining in a case where encoding rate differs;
Fig. 13 illustrates an example of retransmission combining by a retransmission combiner;
Fig. 14 illustrates an example of a packet transmission system according to the prior art;
Fig. 15 illustrates the structure of a signal modulator on the transmitting side according to the prior art;
Fig. 16 is a block diagram illustrating a first structure of a signal modulator on the receiving side according to the prior art ;
Fig. 17 is a block diagram illustrating a second structure of a signal demodulator on the receiving side according to the prior art ;
Fig. 18 is a diagram showing the structure of a punctured decoder according to the prior art;
Fig. 19 is a diagram for describing punctured decoding according to the prior art;
Fig. 20 is a block diagram illustrating the structure on the receiving side from a retransmission combiner onward according to the prior art;
Fig. 21 illustrates an example of signal modulation on the transmitting side according to the prior art;
Fig. 22 illustrates an example of signal demodulation on the receiving side according to the prior art;
Figs. 23A, 23B are diagrams for describing Chase combining according to the prior art;
Figs. 24A, 24B are diagrams for describing IR combining according to the prior art; and
Fig. 25 illustrates an example of a punctured code pattern according to the prior art.

### DESCRIPTION OF THE PREFERRED EMBODIMENT

### (A) Overall operation of the present invention

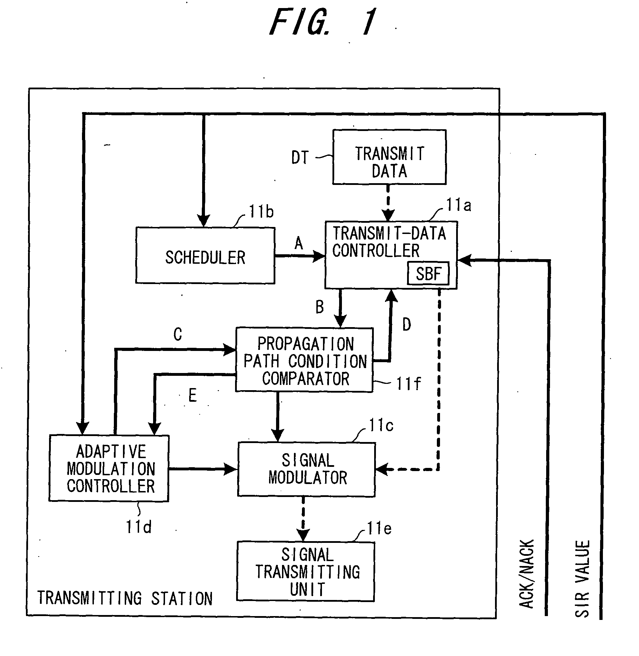

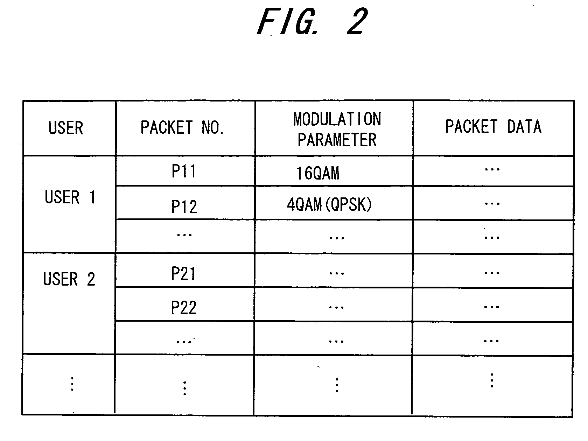

Fig. 1 is a block diagram of retransmission control implemented by a transmitting station in conformity with conditions of a propagation path according to the present invention. The dashed lines in Fig. 1 indicate the flow of data signals and the solid lines indicate the flow of control signals. Transmit data DT (data that is actually transmitted via a network) generated on a per-mobile-station basis is accumulated in a signal buffer SBF within a transmit-data controller 11a at one time. Implementations of the signal buffer include one in which retransmitted data and new data are kept separate from each other, one in which these items of data are kept together, and one in which these items of data are kept separate or kept together depending upon the type of traffic. Fig. 2 is a diagram useful in describing transmit data in the signal buffer SBF. The buffer stores, user by user, the modulation parameter (e.g., the type of data modulation scheme, namely QPSK, 16-QAM, ···) prevailing at the time of packet transmission and packet data in association with a packet number. The packet data is deleted from the buffer SBF if ACK information indicating successful reception is sent back from the receiving station. If NACK information indicating reception failure is sent back, the packet data is held in the buffer SBF and continues to be retained in the buffer until reception succeeds owing to retransmission. On the basis of information such as the SIR value, a scheduler 11 b selects the user whose packet is to be transmitted next and so notifies the transmit-data controller 11 a.

In accordance with the user information reported, the transmit-data controller 11 a transmits the transmit-signal data of this user, which is located in the signal buffer SBF, to a signal modulator 11c. On the basis of the SIR value, an adaptive modulation controller 11 d calculates a modulation parameter suited to the user, reports the parameter to the signal modulator 11 c and inputs the modulation parameter to the transmit-data controller 11 a via a comparator 11f for comparing propagation path conditions.

If the transmit signal data is not a retransmission signal packet, the signal modulator 11c modulates the packet signal (composed of the packet number, modulation parameter and packet data) using the reported modulation parameter and transmits the modulated signal wirelessly via a signal transmitting unit 11e. If ACK information indicating successful reception is sent back from the receiving station, the transmit-data controller 11 a deletes the corresponding packet data from the signal buffer SBF. If NACK information indicating reception failure is sent back from the receiving station, the transmit-data controller 11 a holds the modulation parameter and packet data in the signal buffer SBF in association with the packet number.

If the transmit signal data is a retransmission signal packet, on the other hand, the comparator 11f compares a propagation path condition (modulation parameter) B that prevailed when this packet was transmitted afresh and a propagation path condition (modulation parameter) C prevailing at the time of the present transmission. If B and C are the same, the comparator 11f sends the signal modulator 11c the modulation parameter of the initial transmission, the signal modulator 11c performs signal modulation using the reported modulation parameter and transmits the modulated signal wirelessly via the signal transmitting unit 11e. If B and C are different, however, any of the following three means can be adopted:
1. As first means, the comparator 11f reports information D [the fact that B ≠ C holds and the present propagation path condition (modulation parameter C)] to the transmit-data controller 11a, and the transmit-data controller 11 a changes the packet that is to be transmitted to a packet of a different user in such a manner that the result of the comparison will indicate agreement.
2. As second means, the comparator 11f reports the information D to the transmit-data controller 11 a, and the transmit-data controller 11 a changes the packet that is to be transmitted to a different packet of the same user in such a manner that the result of the comparison will indicate agreement.
3. As third means, the comparator 11f reports the information D to the transmit-data controller 11 a and reports a comparison result E (the fact that B ≠ C holds) to the adaptive modulation controller 11 d. The transmit-data controller 11 a compares the modulation parameter that has been attached to the packet data to be retransmitted and the modulation parameter conforming to the propagation path condition prevailing at the time of retransmission. If the result of the comparison is that the propagation path condition at the time of retransmission is superior to the propagation path condition that prevailed at the time of the previous transmission, the transmit-data controller 11 a inputs a plurality of packets that have been stored in the signal buffer SBF to the signal modulator 11 c as a single retransmission packet signal upon attaching respective ones of the identifying information of these packets. Further, if the result of the comparison is that the propagation path condition at the time of retransmission is inferior to the propagation path condition that prevailed at the time of the previous transmission, the transmit-data controller 11 a inputs a part of a packet that has been stored in the signal buffer SBF to the signal modulator 11c as a single retransmission packet signal upon attaching the identifying information.

The adaptive modulation controller 11 d inputs the modulation parameter conforming to the presently prevailing propagation path condition to the signal modulator 11 c, which proceeds to modulate and transmit the retransmission packet based upon the modulation parameter that has entered from the adaptive modulation controller 11 d.

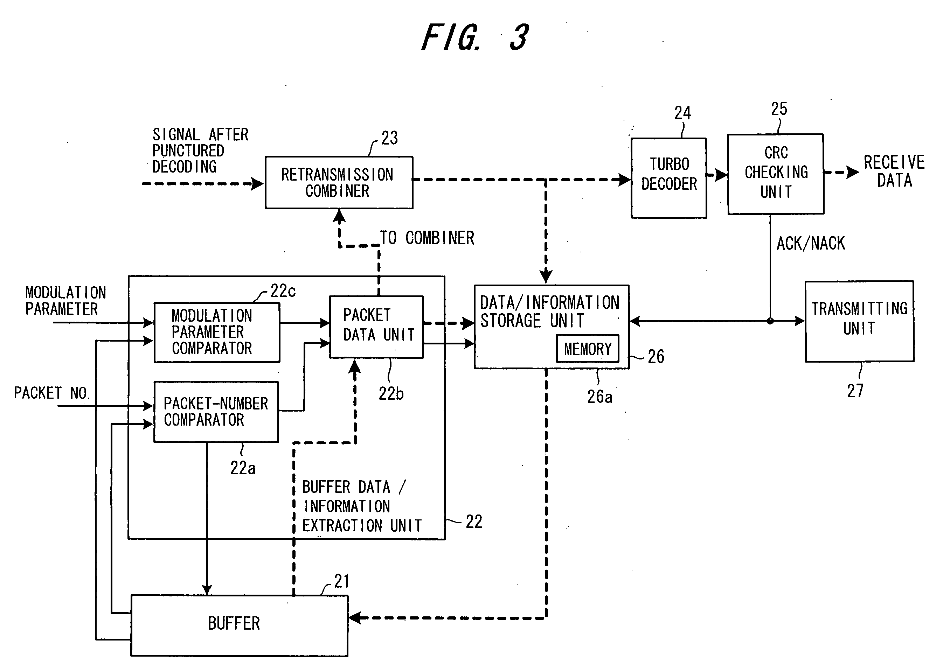

Fig. 3 is a block diagram illustrating the structure on the receiving side from a retransmission combiner onward.

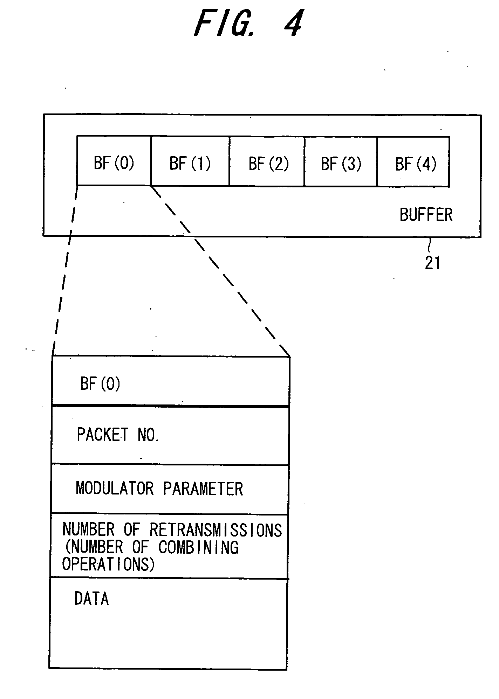

As shown in Fig. 4, packets of data [BF(0) to BF(4)] for which reception has failed are stored in regular order in a buffer 21 along with the packet numbers, modulation parameters and numbers of retransmissions. A buffer data / information extraction unit 22 has a packet-number comparator 22a for referring to the packet number of a packet that has been retransmitted, extracting the packet data having this packet number from the buffer 21 and inputting the data to a packet data unit 22b. The extraction unit 22 also inputs the modulation parameter of this packet of data to a modulation parameter comparator 22c. The modulation parameter comparator 22c compares the modulation parameter of the retransmission packet and the modulation parameter that has entered from the buffer 21 and inputs the result of the comparison to the packet data unit 22b. On the basis of the result of the comparison of modulation parameters, the packet data unit 22b either inputs the packet data that has entered from the buffer 21 to a retransmission combiner 23 as is or upon separating the data. If a receive packet (actually a signal obtained after application of punctured decoding) is not a retransmission packet, i.e., if the receive packet is a new packet, the retransmission combiner 23 allows the packet to pass as is and inputs it to a turbo decoder 24. If the packet of data is retransmission packet data, then the retransmission combiner 23 combines it with the packet of data that enters from the packet data unit 22b and inputs the combined data to the turbo decoder 24.

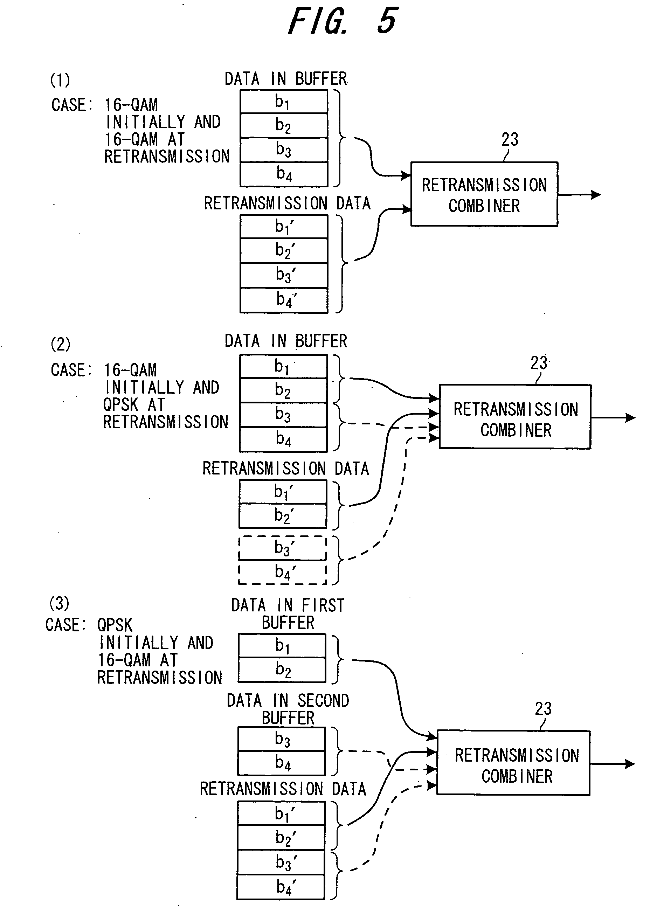

Fig. 5 is a diagram for describing retransmission combining. Assume that modulation has been performed according to a modulation parameter (data modulation scheme) of 16-QAM both at the time of initial transmission and at the time of retransmission, as indicated at (1) in Fig. 5. In such case the data is modulated and transmitted four bits (b1 to b4; b1' to b4') at a time both at the time of initial transmission and at the time of retransmission. The packet-data lengths, therefore, are equal. For the sake of explanation, assume that the packet-data length is four bits. The packet data unit 22b inputs all of the packet data (b1 to b4) that enters from the buffer 21 to the retransmission combiner 23, and the latter combines the retransmission data (b1' to b4') and the packet data (b1 to b4), which has been read out of the buffer, and outputs the combined data.

Now assume that modulation has been performed by 16-QAM at the time of the initial transmission and by QPSK (4-QAM) at the time of the retransmission, as indicated at (2) in Fig. 5. In such case the data is modulated and transmitted four bits (b1 to b4) at a time at the time of the initial transmission and is modulated and transmitted two bits (b1' and b2'; b3' and b4') at a time at the time of retransmission. The packet-data length, therefore, is half that which prevailed at the time of the initial transmission. In other words, the packet-data length within the buffer is double the packet length prevailing at the time of retransmission. Consequently, if the packet-data length in the buffer is four bits, the packet data unit 22b inputs the first half (b1 and b2) of the packet data (b1 to b4) that enters from the buffer 21 to the retransmission combiner 23, and the retransmission combiner 23 combines the retransmission data (b1' and b2') and the packet data (b1 and b2) and outputs the combined data. If the succeeding retransmission packet data (b3' and b4') is then send in, the packet data unit 22b similarly inputs the latter half (b3 and b4) of the packet data (b1 to b4) that enters from the buffer 21 to the retransmission combiner 23, and the retransmission combiner 23 combines the retransmission data (b3' and b4') and the packet data (b3 and b4) and outputs the combined data.

Next, assume that modulation has been performed by QPSK at the time of the initial transmission and by 16-QAM at the time of the retransmission, as indicated at (3) in Fig. 5. In such case the data is modulated and transmitted two bits (b1 and b2; b3 and b4) at a time at the time of the initial transmission and is modulated and transmitted four bits (b1' to b4') at a time at the time of retransmission. The packet-data length, therefore, is double that which prevailed at the time of the initial transmission. In this case, since the packet data (b1 and b2) enters from the buffer 21, the packet data unit 22b first inputs this packet data to the retransmission combiner 23, which proceeds to combine the first half (b1' and b2') of the retransmission data (b1' to b4') and the packet data (b1 and b2) and output the combined data. Then, since the packet data (b3 and b4) enters from the buffer 21 next, the packet data unit 22b inputs this packet data to the retransmission combiner 23, which proceeds to combine the latter half (b3' and b4') of the retransmission data (b1' to b4') and the packet data (b3 and b4) and output the combined data.

With reference again to Fig. 3, the turbo decoder 24 applies turbo decoding to the input data, and a CRC checking unit 25 executes a CRC checking operation using the decoded data, checks to see whether the data contains an error, outputs the data as receive data and generates an ACK signal if no error is contained, and generates a NACK signal if the data contains an error. If the ACK signal is generated when a retransmission packet is received, a data/information storage unit 26 deletes this packet from the buffer 21. If the NACK signal is received, the data/information storage unit 26 stores retransmission combination data in the buffer 21 together with the packet number. A transmitting unit 27 transmits the ACK/NACK information to the transmitting side.

To summarize, therefore, the present invention is such that the packet number of a packet that has been transmitted is compared with the packet number of a packet that has been stored in the buffer 21, as a result of which packet data corresponding to a retransmitted packet can be read out of the buffer 21 and combined even though the order of packet transmission is switched. Further, modulation parameters are compared. If the modulation parameters are found to differ, the data length of a retransmission packet and the data length of a packet within the buffer are calculated, thereby making it possible to extract from the buffer and combine data that corresponds to the data of the retransmitted packet.

### (B) Retransmission combining processing

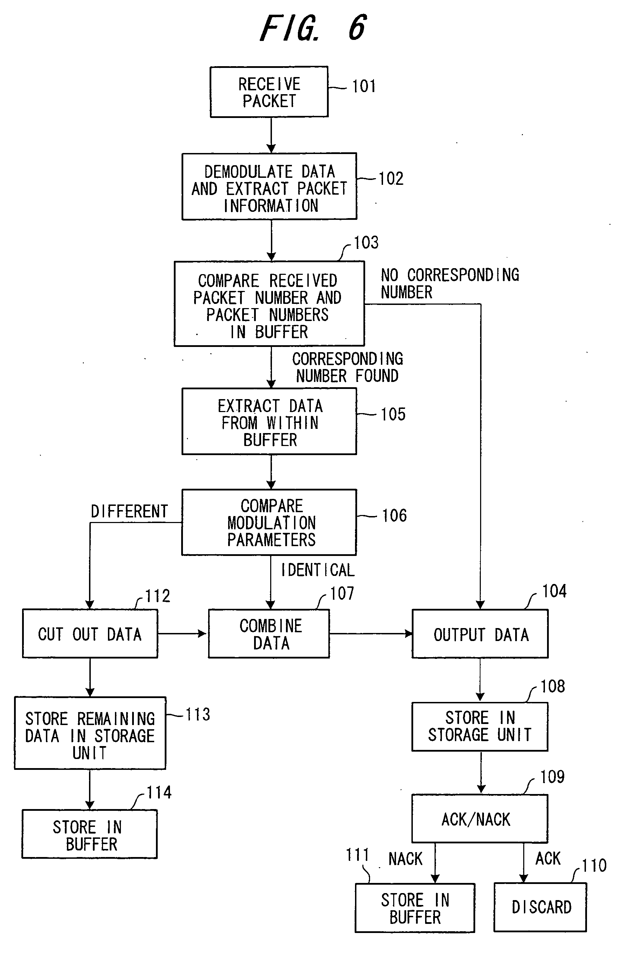

Fig. 6 is a flowchart illustrating retransmission combining processing according to the present invention.

A transmitter and receiver usually possess identical buffers and the buffers are controlled using identical ACK/NACK information. Data in a new transmit packet is stored at the tail-end of the buffer [BF(4) in Fig. 4) after transmission (after reception). At the time of a retransmission, the packet at BF(0) is transmitted and, after transmission, it is stored at BF(4) again while being shifted. On the receiving side, the retransmission data and the packet of data at BF(0) are combined and, if reception fails, the combined data is stored at BF(4) while being shifted. The content of each buffer is shifted one at a time [BF(i) (BF(i+1)] whenever transmission/reception is performed. If reception has succeed on the receiving side, ACK is reported to the transmitting side and is also reported internally within the receiver and the applicable buffer content is discarded. This operation is carried out in similar fashion by the transmitter and receiver. As a result, a packet that is identical with the packet retransmitted on the transmitting side can be combined on the receiving side. When packet retransmission is performed, however, there are cases where the conditions of the propagation path at the time of initial transmission and the present propagation path conditions (the conditions of the propagation path at the time of retransmission) differ greatly. If the present propagation path conditions are inferior to those at the time of the initial transmission, the modulation parameter that was set at the initial transmission will be too large for the present propagation path conditions and there is a high likelihood that that reception will fail again. Conversely, if the present propagation path conditions are superior to those at the time of the initial transmission, the modulation parameter that was set at the initial transmission will be too small for the present propagation path conditions and there is a high likelihood that that radio resources will be wasted.

If the initial propagation path conditions and the present propagation path conditions are similar for the packet that is within the buffer, then transmitting this packet makes more efficient retransmission possible. If propagation path conditions equivalent to those at the time of the initial transmission prevail, there is a possibility that reception will fail but an improvement in reception quality by virtue of combining data can be expected. To what degree propagation path conditions can be allowed is also decided by the degree of improvement in reception quality achieved by combining data. At the receiver, however, retransmission of the packet based upon buffer BF(0) is expected; if another packet is transmitted, the combining of data cannot be carried out.

In the present invention, as illustrated in Fig. 3, the signal demodulator on the receiving side is provided with the buffer data / information extraction unit 22. The signal demodulator on the receiving side receives a transmitted packet (step 101), demodulates the data, extracts packet information (step 102) and inputs the packet number and modulation parameter to the buffer data / information extraction unit 22.

The buffer data / information extraction unit 22 compares the packet number of the entered packet with the packet numbers of packet data in the buffer (step 103). If there is no identical packet, then the entered packet is judged to be a new transmit packet and the data is not sent to the retransmission combiner 23. Accordingly, if the entered packet is a new transmit packet, the retransmission combiner 23 outputs the data without performing retransmission combining (step 104).

On the other, if an identical packet is found at step 103, the packet data having this number is extracted from the buffer 21 and is stored in the packet data unit 22b of the buffer data / information extraction unit 22 (step 105). Next, the buffer data / information extraction unit 22 compares the modulation parameter that has been attached to the retransmission packet and the modulation parameter of the packet data that has been read out of the buffer 21 (step 106). If the modulation parameters are identical, i.e., if packet data having a length identical with that of the packet data in the buffer has been retransmitted, the buffer data / information extraction unit 22 sends the packet data that has been read out to the packet data unit 22b to the retransmission combiner 23, which performs retransmission combining (step 107) and outputs the combined data (step 104). As a result, even though the order of packet transmission is changed on the transmitting side, retransmission combining on the receiving side is possible.

The packet data obtained by combining is output to the turbo decoder 24 and is stored temporarily in a memory 26a in the data/information storage unit 26 (step 108). The turbo decoder 24 averages (normalizes) the entered combined data based upon the number of retransmissions, applies turbo decode processing to the averaged packet data and inputs the decoded result to the CRC checking unit 25. The CRC checking unit (the packet discriminator on the receiving side) 25 performs a CRC check and outputs ACK/NACK based upon the result of the CRC check (step 109). If it is sent ACK information, the data/information storage unit 26 discards the packet data that has been saved. If it is sent NACK information, the data/information storage unit 26 stores the packet data that is being held at the tail end [BF(4) in Fig. 4] of buffer 21. A similar operation is performed by the transmitter. As shown in Fig. 4, packet number, modulation parameter of the packet, number of retransmissions and data have been stored in the buffer 21. In this case, the number of retransmissions is counted up by one count.

If it is determined at step 106 that the modulation parameters differ, e.g., if the propagation path conditions at the time of retransmission are inferior to those at the time of the initial transmission, the modulation parameter is diminished to alter the setting and the packet is transmitted. In order to diminish the modulation parameter, the number of multiple values in data modulation is reduced, the number of multicodes is reduced, the spreading factor is raised or the encoding rate is reduced. As a result, the number of items of data that can be transmitted at the time of retransmission is made less than that at the time of the initial transmission. It should be noted that a plurality of modulation parameters can be changed simultaneously to reduce the number of items of transmit data. Thus, in a case where the propagation path conditions at the time of retransmission are inferior to those at the time of initial transmission, retransmission that conforms to the propagation path conditions is carried out by lowering the modulation parameter (i.e., by reducing the amount of transmit information per packet).

If the result of the comparison at step 106 is that the modulation parameter at the time of retransmission is low, the data length in the initial packet transmission (i.e., the packet data in the buffer) and the data length of the retransmission packet at the time of retransmission are calculated by referring to each modulation parameter. In this case, the data length of the retransmission packet is shortened [see (2) in Fig. 5].

The buffer data / information extraction unit 22 cuts part of the data having the length corresponding to the data length of the present retransmission packet from the packet data that has been read out to the packet data unit 22b from the buffer 21 (step 112) and sends only the data that has been cut out to the retransmission combiner 23. The latter combines the cut-out data and the present retransmission data (step 107), outputs the combined data and stores the combined data in the memory 26a of the data/information storage unit 26 (steps 107, 104, 108).

Further, from the data in the packet data unit 22b, the buffer data / information extraction unit 22 stores the remaining data not used in combining in the memory 26a of the data/information storage unit 26 together with the packet number, modulation parameter and number of retransmissions (step 113).

If the data after the combination with the present retransmission packet does not contain an error and ACK thgerefore is reported, the data/information storage unit 26 discards the data segment having the length corresponding to the present retransmission packet that has been stored in the internal memory 26a (step 110) and writes only the data not used in retransmission combining to the buffer 21 again (step 114). In relation to this portion of the data, retransmission combining is not carried out and therefore the number of retransmissions is not incremented. If NACK is reported with regard to the present retransmission packet, both items of data are stored together in an area of the same buffer 21 (steps 111, 114). In this case, the number of retransmissions (number of combining operations) differs between the two items of data. The two items of data can also be stored in different buffer areas.

### (C) Example of packet structure(when propagation path conditions are better at the time of initial transmission than at the time of retransmission)

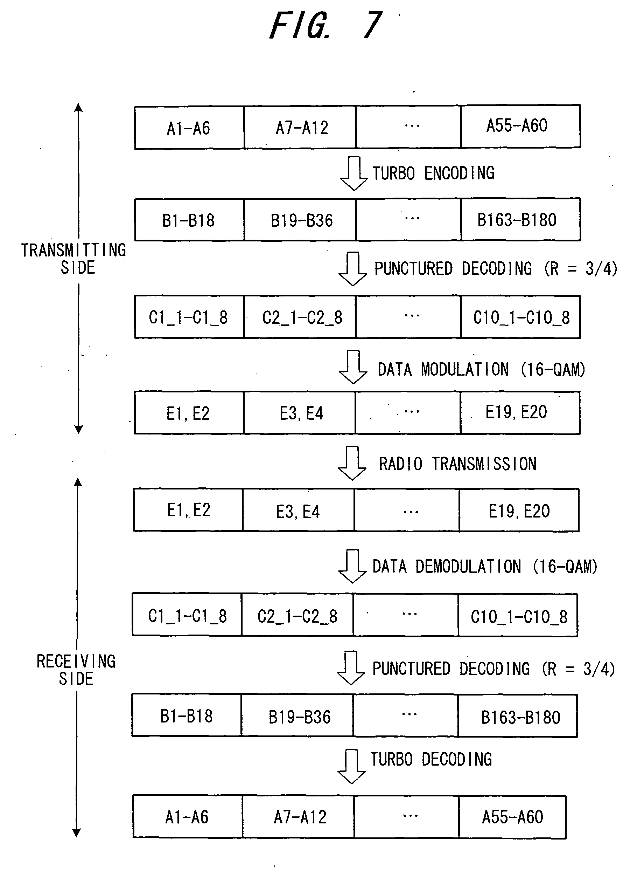

Fig. 7 illustrates an example of packet structure at the time of the initial transmission. The symbols correspond to those in Fig. 21. Assume that the transmit data is A1 to A60 at the time of the initial transmission in Fig. 7. The transmit data A1 to A60 is separated into sets of 6-bit data A1 to A6, A7 to A12, ···, and A55 to A60. Each set of 6-bit data is turbo encoded at an encoding rate of 1/3 to obtain B1 to B18, B19 to B36, ···, B163 to B180. Each 18-bit turbo code is subjected to punctured encoding at an encoding rate of 3/4 to thereby obtain sets of 8-bit data C1#1 to C1#8, C2#1 to C2#8, ···, C10#1 to C10#8. If the 8-bit data C1#1 to C1#8, C2#1 to C2#8, ···, C10#1 to C10#8 is subjected to data modulation by 16-QAM owing to the conditions of the propagation path, then the data is converted to 4-bit data E1 to E20, data modulation by 16-QAM is applied and the modulated data is transmitted.

On the receiving side, C1#1 to C1#8, ···, C10#1 to C10#8 is obtained by data demodulation according to 16-QAM. Each item of data is written to a "1" portion of a punctured code pattern B1 to B180 by punctured decoding.

Because this is the initial transmission, no data has been read out from the buffer 21 to the packet data unit 22b of buffer data / information extraction unit 22 and therefore the packet data unit 22b is all "0"s. The buffer data / information extraction unit 22 inputs all "0"s to the retransmission combiner 23. The latter combines all "0"s with the new packet data B1 to B180, inputs the result of combining to the turbo decoder 24 and stores the result in the memory 26a of the data/information storage unit 26.

Next, the turbo decoder 24 subjects the new packet data to turbo decoding to obtain data A1 to A60. If the data A1 to A60 is found to be erroneous by a CRC check, the data/information storage unit 26 plants the packet data B1 to B180, which has been stored in memory 26a, in the buffer 21.

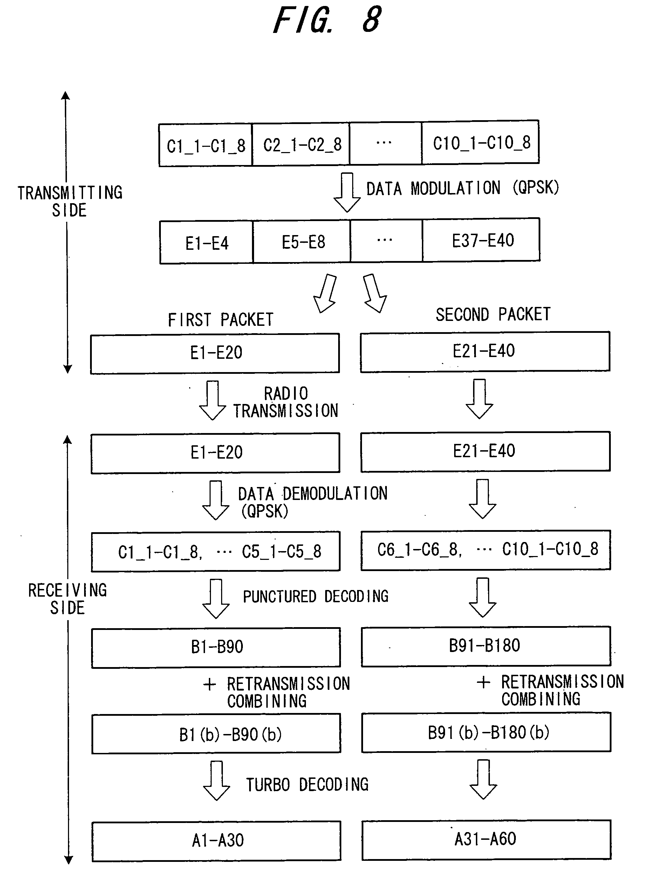

Fig. 8 illustrates packet structure in a case where packet data is retransmitted upon changing the modulation scheme from 16-QAM to QPSK by reason of a deterioration in propagation path conditions at the time of retransmission. If the sets of 8-bit data C1#1 to C1#8, C2#1 to C2#8, ···, C10#1 to C10#8 after application of punctured encoding are subjected to data modulation by QPSK modulation, the data is converted to 2-bit data E1 to E40, modulated according to QPSK and transmitted.

The data E1 to E40 is twice the number of data in comparison with the initial transmission. The transmitter therefore transmits the data upon splitting it into two packets. The first packet will be described. The data E1 to E20 is transmitted by the first packet, and C1#1 to C1#8, ···, C5#1 to C5#8 is obtained by QPSK data demodulation. Each item of data is written to a "1" portion of a punctured code pattern B1 to B90 by punctured decoding.

Data at B1 (b) to B180(b) is read out of the buffer 21 and stored in the packet data unit 22b of the buffer data / information extraction unit 22. The buffer data / information extraction unit 22 cuts out the first half B1 (b) to B90(b) and inputs it to the retransmission combiner 23, and also stores the latter half B91 (b) to B180(b) in the memory 26a of the data/information storage unit 26. The retransmission combiner 23 combines the cut-out first half B1 (b) to B90(b) of the packet and the retransmission packet data B1 to B90, inputs the combined data to the turbo decoder 24 and stores it in the memory 26a of the data/information storage unit 26.

Next, the turbo decoder 24 averages the combined packet data based upon the number of retransmissions, applies turbo decoding to the averaged packet data and obtained A1 to A30. If it is clarified by a CRC check that the data A1 to A30 is not erroneous, the data/information storage unit 26 stores only the remaining data B91 (b) to B180(b) in the buffer 21. If the data A1 to A30 is erroneous, however, then the data/information storage unit 26 stores the data obtained by combining the first half in the buffer 21 again and increments the retransmission count. Further, the data/information storage unit 26 stores the latter half in the buffer 21 as is.

Thus, even if a modulation parameter such as number of multiple values in modulation, the number of multicodes, the encoding rate or the spreading factor is made lower than at the time of the initial transmission and retransmitted, a portion of appropriate data length is specified from the data in buffer 21 based upon the result of the comparison by the modulation parameter comparator 22c of the buffer data / information extraction unit 22 and retransmission combining becomes possible.

### (D) Processing when propagation path conditions are worse at the time of initial transmission than at the time of retransmission

Assume that the conditions of the propagation path at the time of retransmission are better than at the time of the initial transmission, that the modulation parameter is changed to a larger setting and that the packet is then retransmitted. In order to enlarge the modulation parameter, the number of multiple values in modulation is increased, the number of multicodes is increased, the spreading factor is lowered or the encoding rate is made to approach unity. As a result, the number of items of data that can be transmitted at the time of retransmission is made greater than that at the time of the initial transmission and throughput can be improved.

Data length (packet length) is enlarged by setting the parameter to be higher than at the time of the initial transmission. As a result, the transmitting station can add data of another packet onto the packet data that prevailed at the initial transmission and can retransmit the data. In order to identify the data in such case, the packet number of the packet of data that has been added on is appended in addition to the packet number of the retransmission packet at the time of initial transmission. The buffer data / information extraction unit 22 on the receiving side recognizes by means of the packet-number comparator 22a whether the data of the packets having the packet number of the retransmission packet and the packet number of the added-on data is present in the buffer 21. In a case where packet data corresponding to the first packet number has been stored in buffer area BF(0), the data of BF(0) is extracted. If a number corresponding to the second packet number is not present in the buffer 21, the buffer data / information extraction unit 22 judges the additional data to be new data, extracts only the data in buffer area BF(0) and sends this data to the retransmission combiner 23 again. Since all of the data of buffer area BF(0) is retransmitted, this data is input to the retransmission combiner 23 as is. The latter combines the retransmission packet data corresponding to the first packet number and the data in buffer area BF(0). In a case where packet data corresponding to the second packet number has been stored in buffer area BF(1), the data that has been added on is judged to be retransmission of the packet corresponding to the data in buffer area BF(1). In such case the data of BF(1) also is extracted simultaneously and stored in the packet data unit 22b. However, all of the data in buffer area BF(1) is not necessarily retransmitted. With regard to the data in buffer area BF(1), there are also cases where the modulation parameter of the retransmission data has been altered and cases where the parameter is the same and only the number of items of data has been reduced.

The buffer data / information extraction unit 22 identifies the modulation parameter and data length using the modulation parameter comparator 22c, cuts out the portion of the data corresponding to the length of data that has been transmitted from the data of buffer area BF(1) in the packet data unit 22b and sends the cut-out data to retransmission combiner 23. After the retransmission combiner 23 combines the data in accordance with the numbers of retransmissions of both items of data [the numbers of retransmissions that have been recorded in BF(0) and BF(1)], normalization is carried out. These items of data are stored temporarily in memory 26a of the data/information storage unit 26. The CRC checking unit 25 performs a CRC check and reports ACK/NACK regarding both items of data (in this case the data corresponding to the first packet number and the data corresponding to the second packet number). The data/information storage unit 26 stores data in or discards data from the buffer 21 depending upon each ACK/NACK reported. If NACK is reported for both items of data, then these items of data are stored in separate buffer areas.

Thus, even if a modulation parameter such as number of multiple values in modulation, the number of multicodes, the encoding rate or the spreading factor is made higher than at the time of the initial transmission, other data is added onto the data of the initial transmission and the resultant data is then retransmitted, two items of data are identified by the packet-number comparator 22a of the buffer data / information extraction unit 22, the appropriate data is specified from the data in the buffer by the modulation parameter comparator 22c and retransmission combining becomes possible.

### (E) Example of packet structure(when propagation path conditions are better at the time of retransmission than at the time of initial transmission)

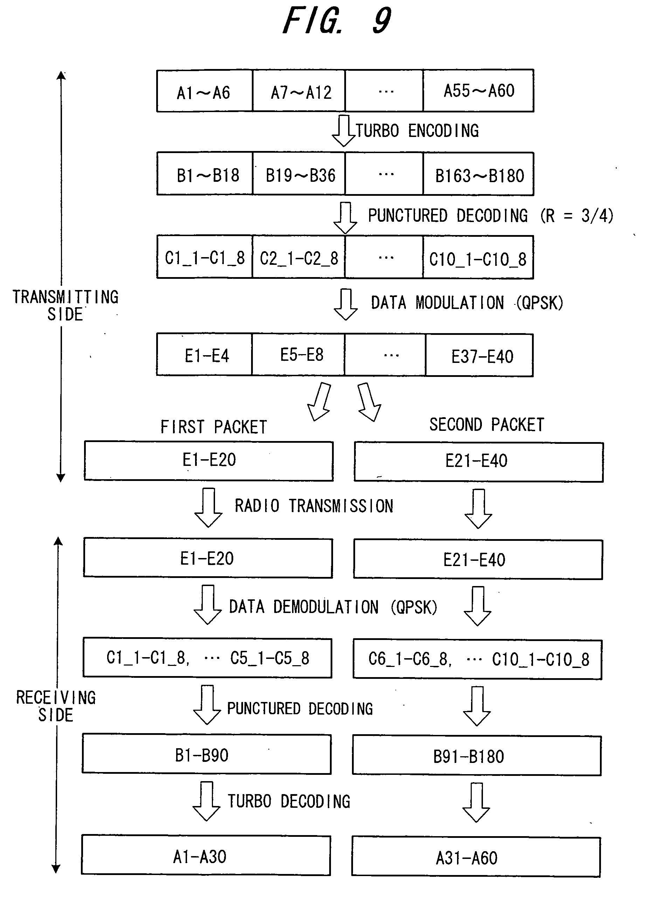

Fig. 9 illustrates an example of packet structure at the time of the initial transmission. Assume that the transmit data is A1 to A60 at the time of the initial transmission in Fig. 9. The transmit data A1 to A60 is separated into sets of 6-bit data A1 to A6, A7 to A12, ···, A55 to A60. Each set of 6-bit data is turbo encoded at an encoding rate of 1/3 to obtain B1 to B18, B19 to B36, ···, B163 to B180. Each 18-bit turbo code is subjected to punctured encoding at an encoding rate of 3/4 to thereby obtain sets of 8-bit data C1#1 to C1#8, C2#1 to C2#8, ···, C10#1 to C10#8. The sets of 8-bit data C1#1 to C1#8, C2#1 to C2#8, ···, C10#1 to C10#8 are subjected to data modulation by 4-QAM (= QPSK) owing to the conditions of the propagation path. If it is assumed that the data length of one packet is decided based upon the length of data that prevails at transmission according to 16-QAM modulation, then, in case of QPSK modulation, the transmission speed is halved (the substantial data length is doubled) and the bit data C1#1 to C1#8, C2#1 to C2#8, ···, C10#1 to C10#8 is split into two packets and transmitted.

The first packet will be described. The data E1 to E20 is transmitted by the first packet, and C1#1 to C1#8, ···, C5#1 to C5#8 is obtained by QPSK data demodulation. Each item of data is written to a "1" portion of a punctured code pattern B1 to B90 by punctured decoding.

Because this is the initial transmission (because the data is the initial data), no data has been read out from the buffer 21 to the packet data unit 22b of buffer data / information extraction unit 22 and therefore the packet data unit 22b is all "0"s. The buffer data / information extraction unit 22 inputs all "0"s to the retransmission combiner 23. The latter combines all "0"s with the new packet data B1 to B90, inputs the result of combining to the turbo decoder 24 and stores the result in the memory 26a of the data/information storage unit 26.

Next, the turbo decoder 24 subjects the new packet data to turbo decoding to obtain data A1 to A30. If the data A1 to A30 is found to be erroneous by a CRC check, the data/information storage unit 26 plants the packet data B1 to B90, which has been stored in memory 26a, in the buffer 21.

Next, if the second packet is received, processing similar to that for the first packet is executed and the turbo decoder 24 applies turbo decoding to the new packet data to obtain data A1 to A30. If it is determined by the CRC check that the data A1 to A30 is erroneous, the data/information storage unit 26 plants the packet data B1 to B90 that has been stored in the memory 26a to the buffer 21.

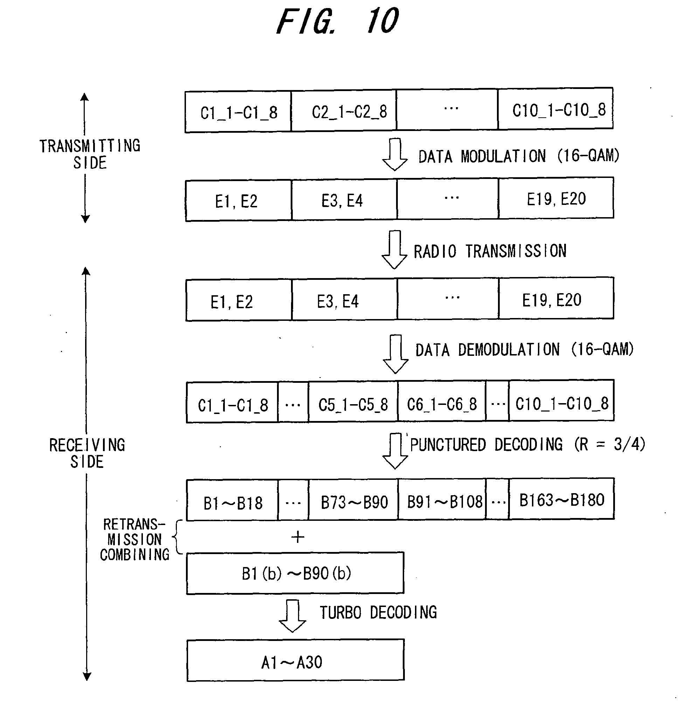

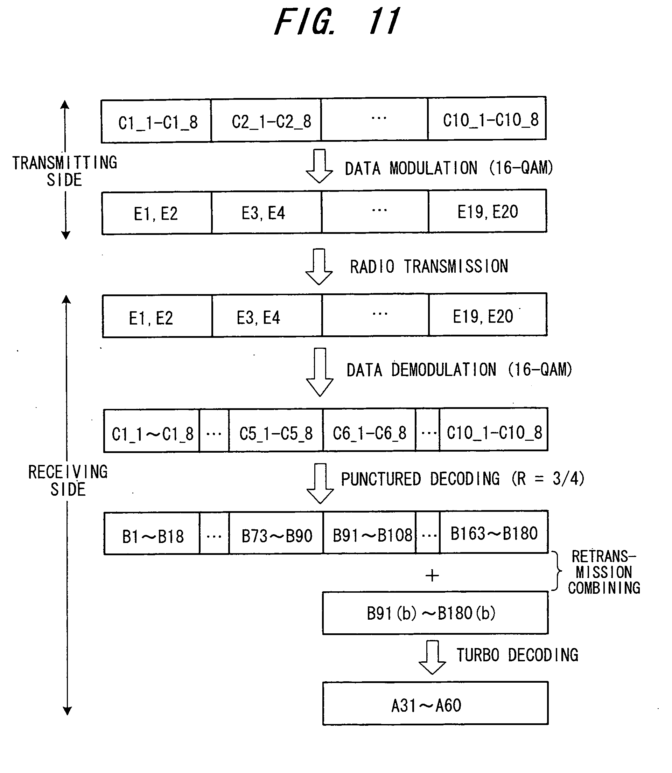

Figs. 10 and 11 are diagrams of packet structure in a case where packet data is retransmitted upon changing the modulation scheme from QPSK to 16-QAM by reason of an improvement in propagation path conditions at the time of retransmission.

It is assumed in Fig. 10 that the sets of 8-bit data C1#1 to C1#8, C2#1 to C2#8, ···, C10#1 to C10#8 resulting from punctured encoding is modulated according to 16-QAM. In such case the data is converted to 4-bit data E1 to E20, data modulation by 16-QAM is applied and the modulated data is transmitted. Since the data rate of 16-QAM is twice that at the time of the initial transmission, the transmitter combines the first and second packets of the initial transmission into one packet and transmits this packet.

The demodulator on the receiving side receives the data E1 to E20, applies 16-QAM modulation to generate decoded data C1#1 to C1#8, C2#1 to C2#8, ···, C10#1 to C10#8, and the punctured decoder writes this decoded data to "1" portions of a punctured code pattern B1 to B180 to perform punctured decoding.

Two packets of data B1 (b) to B90(b) and B91 (b) to B180(b) have been read out of the buffer 21 and stored in the packet data unit 22b of the buffer data / information extraction unit 22. The buffer data / information extraction unit 22 first inputs the data B1(b) to B90(b) to the retransmission combiner 23. The latter combines the data B1(b) to B90(b) with the first half B1 to B90 of the retransmission packet data B1 to B180, inputs the combined data to the turbo decoder 24 and stores the combined data in the memory 26a of the data/information storage unit 26.

Next, the turbo decoder 24 applies turbo decoding to packet data obtained as a result of averaging the combined packet data based upon the number of retransmissions and obtains data A1 to A30. If the data A1 to A30 is found to be erroneous by a CRC check, the data/information storage unit 26 stores the combined data in the buffer 21 again and increments the number of retransmissions.

Thereafter, or if the data A1 to A30 is not erroneous, the buffer data / information extraction unit 22 inputs the data of B91 (b) to B180(b) from the packet data unit 22b to the retransmission combiner 23. The latter combines the data of B91 (b) to B180(b) with the latter half B91 to B180 of the retransmission packet data B1 to B180 (see Fig. 11), inputs the combined data to the turbo decoder 24 and stores the combined data in the memory 26a of the data/information storage unit 26.

Next, the turbo decoder 24 applies turbo decoding to packet data obtained as a result of averaging the combined packet data based upon the number of retransmissions and obtains data A31 to A60. If the data A31 to A60 is found to be erroneous by a CRC check, the data/information storage unit 26 stores the combined data in the buffer 21 again and increments the number of retransmissions.

### (F) Embodiment in case where encoding rate is changed

The foregoing relates to a case where the data modulation scheme is changed over as a modulation parameter in accordance with the conditions of the propagation path. However, the encoding rate R can also be changed over in accordance with the propagation path conditions. For example, the more the conditions of the propagation path worsen, the more the encoding rate R is lowered to strengthen resistance against the influence of the propagation path. As a result, the encoding rate at the time of retransmission changes from that which prevailed at the time of the initial transmission.

If the encoding rate changes, the punctured code pattern used in punctured encoding will differ. This means that retransmission combining cannot be performed at a stage prior to punctured decoding. That is, simple combining of data at identical positions can no longer be performed, as in Chase combining. If the modulation parameter comparator 22c in Fig. 2 has determined that the encoding rate is different, packet data corresponding to data of a retransmission packet is read out of the buffer 21 and sent to the retransmission combiner 23. Since the data-write position of packet data in the buffer 21 and of the data prevailing after the punctured decoding of the retransmission packet differ, combining is carried out taking into consideration each of the punctured code patterns.

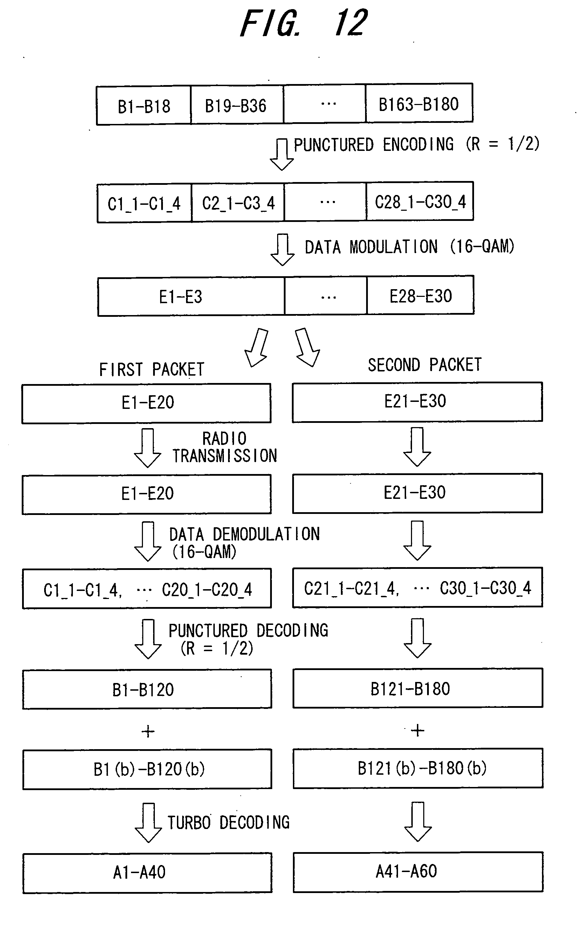

Fig. 12 is a diagram useful in describing combining in a case where encoding rate differs. This corresponds to the packet structure in Fig. 7 at the time of the initial transmission. At the initial transmission in Fig. 7, the encoding rate R is 3/4 and data is transmitted upon applying 16-QAM data modulation. Accordingly, the data stored in the buffer 21 that stores packets for which reception has failed is data B1 to B180 that prevails following punctured decoding, which data is obtained by subjecting 80-bit demodulated data to decoding according to a punctured code pattern that conforms to the encoding rate R of 3/4.

On the other hand, at the time of retransmission shown in Fig. 12, assume that the conditions of the propagation path worsen and that data is retransmitted upon lowering the encoding rate to 1/2, although the data modulation scheme (16-QAM) is not changed.

The data after modulation is E1 to E30, which is split into two packets. Here the packets are E1 to E20 and E21 to E30, though this can be decided at will. After the data is demodulated, the receiver performs punctured decoding using a punctured code pattern that conforms to the encoding rate of 1/2. After punctured decoding, the receiver cuts data B1(b) to B120(b) corresponding to B1 to B120 out of the initially transmitted packet from the buffer 21 and performs combining using the retransmission combiner 23. Operation after retransmission combining (turbo decoding, CRC check and buffering conforming to the results of the check) is the same as that in the case where the data modulation scheme is changed over.

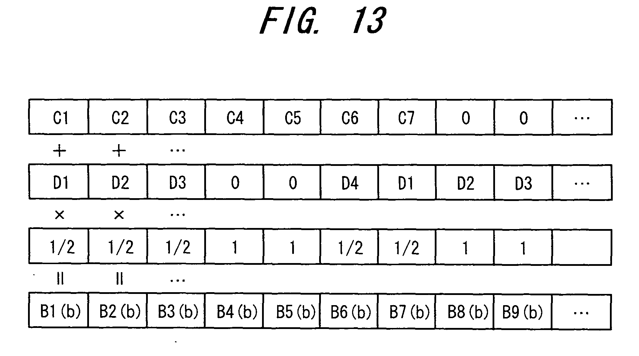

Fig. 13 illustrates an example of retransmission combining by the retransmission combiner 23. Data is written to the positions of C1 to C8 in case of an encoding rate R of 3/4, and data is written to the positions of D1 to D4 in case of an encoding rate R of 1/2. At the location where the code "1"s of both patterns overlap when retransmission combining is carried out, the value after combining is halved and the result of combining is output. At a location where the code "1"s do not overlap, the result of combining is output as. This is followed by performing turbo decoding, CRC check and a buffering operation conforming to the results of the check.

Thus, retransmission combining is possible even if the encoding rate is changed at the time of retransmission.

It should be noted that in a case where the conditions of the propagation path at the time of retransmission are good and retransmission is performed upon making the encoding rate greater that it was at the time of the initial transmission, a plurality of packets of data are extracted from the buffer and combined in a manner similar to that of case (E) above.

To summarize, 1. a punctured decoder applies punctured decode processing to a retransmission packet signal; 2. the modulation parameter comparator 22c compares the encoding rate that has been attached to the retransmission packet signal with the encoding rate that has been attached to packet data extracted from the buffer 21; 3. if the result of the comparison is that the conditions of the propagation path at the time of retransmission are poor, part of the packet data that has been extracted from the buffer 21 is cut out and input to the retransmission combiner 23; and 4. the retransmission combiner 23 combines the packet data prevailing after punctured decoding with the packet data cut out from the buffer 21.

On the other hand, 5. if the result of the comparison is that the conditions of the propagation path at the time of retransmission are good, a plurality of packets of data to undergo retransmission combining are extracted from the buffer 21 and input to the retransmission combiner 23, and 6. the retransmission combiner 23 combines a plurality of parts of the retransmission packet data prevailing after punctured decoding with corresponding ones of the plurality of packets of data that have been extracted from the buffer 21 and outputs the combined data.

Thus, the present invention is such that even in a case where propagation path conditions at the initial transmission of a packet differ from those at the time of retransmission, a transmission that conforms to the currently prevailing propagation conditions can be performed by changing the order in which packets are transmitted in such a manner that the modulation parameters will agree, or by changing the modulation parameter and then transmitting the signal. Further, by comparing packet numbers and comparing modulation parameter on the receiving side, data corresponding to a retransmission packet can be extracted from a buffer and retransmission combining can be carried out, thereby making it possible to prevent repeated packet reception failures, prevent excessive allocation of radio resources and utilize radio resources efficiently.

Further, in accordance with the present invention, the side of the receiving station is provided with a function for comparing packet numbers and a function for comparing modulation parameters, appropriate data is extracted from the buffer and the data can be combined. Therefore, even in a case where propagation path conditions at the time of initial transmission of a packet and the propagation path conditions at the time of retransmission differ, packet transmission and reception conforming to the propagation path conditions at the time of retransmission can be performed and it is possible to prevent repeated packet reception failures. Alternatively, it is possible to prevent use of excessive radio resources.

As many apparently widely different embodiments of the present invention can be made without departing from the spirit and scope thereof, it is to be understood that the invention is not limited to the specific embodiments thereof except as defined in the appended claims.

## Claims

1. A packet receiving apparatus in a communication system for transmitting a packet signal upon changing over a parameter of a transmit signal in accordance with conditions of a propagation path, and, when the packet signal cannot be received correctly on a receiving side, retransmitting the packet signal, combining the packet data received previously and the retransmitted packet data and executing decode processing based upon the combined packet data, said apparatus comprising:
buffer means for storing receive packet data, which contains an error, with identifying information appended thereto;
means for extracting packet data, which is to undergo retransmission combining, from said buffer means upon referring to the identifying information of a retransmission packet;
combining means for combining retransmission packet data with the packet data extracted from said buffer means; and
decoding means for executing decode processing based upon the combined packet data.

2. The apparatus according to claim 1, wherein the parameter is at least one of a number of multiple values in data modulation, a spreading factor and an encoding rate.

3. The apparatus according to claim 1, further comprising:
means for discriminating whether result of decoding is correct or erroneous; and
storing means for storing the combined packet data in said buffer means if the result of decoding contains an error;
wherein said storing means stores number of combining operations in said buffer means together with the combined packet data, and said decoding means executes decode processing based upon a value obtained as a result of averaging the combined packet data using the number of combining operations.

4. The apparatus according to claim 3, wherein if result of decoding is correct, said buffer means discards packet data having the identifying information.

5. The apparatus according to claim 1, further comprising:
means for comparing a first parameter that has been attached to a retransmission packet signal and a second parameter that has been attached to packet data extracted from said buffer means; and
data cutting means for cutting out part of the packet data, which has been extracted from said buffer means, and inputting it to said combining means if result of the comparison is that the conditions of the propagation path at the time of retransmission are inferior.

6. The apparatus according to claim 5, wherein said data cutting means includes:
means for discriminating data length of a retransmission packet based upon a value of the first parameter; and
means for extracting and inputting to said combining means a portion of data having a length equal to said data length from the packet data that has been extracted from said buffer means.

7. The apparatus according to claim 6, further comprising:
means for discriminating whether result of decoding is correct or erroneous; and
storing means for storing the combined packet data in said buffer means if the result of decoding contains an error;
wherein said storing means stores only a remaining portion of data that has not undergone combining in said buffer means if the result of decoding is correct, and stores results of combining and a remaining portion of packet data that has not undergone combining in said buffer means if the result of decoding is erroneous.

8. The apparatus according to claim 1, further comprising:
means for comparing a first parameter that has been attached to a retransmission packet signal and a second parameter that has been attached to packet data extracted from said buffer means; and
extraction means for extracting data of a plurality of packets that are to undergo retransmission combining from said buffer means and inputting these packets of data to said combining means if result of the comparison is that the conditions of the propagation path at the time of retransmission are superior;
wherein said combining means combines and outputs a plurality of portions of retransmission packet data and corresponding ones of data of a plurality of packets that have been extracted from said buffer means.

9. The apparatus according to claim 8, wherein said extraction means extracts data of a plurality of packets that are to undergo retransmission combining from said buffer means using identifying information of a plurality of packets, said identifying information having been attached to the retransmission packet signal.

10. The apparatus according to claim 1, further comprising:
means for applying punctured decode processing to a retransmission packet signal;
means for comparing a first encoding rate as a first parameter that has been attached to the retransmission packet signal and a second encoding rate as a second parameter that has been attached to packet data extracted from said buffer means; and
means for cutting out part of the packet data, which has been extracted from said buffer means, and inputting it to said combining means if result of the comparison is that the conditions of the propagation path at the time of retransmission are inferior;
wherein said combining means combines packet data prevailing after punctured decoding and the packet data that has been cut out of said buffer means.

11. The apparatus according to claim 1, further comprising:
means for applying punctured decode processing to a retransmission packet signal;
means for comparing a first encoding rate as a first parameter that has been attached to the retransmission packet signal and a second encoding rate as a second parameter that has been attached to packet data extracted from said buffer means; and
means for extracting data of a plurality of packets that are to undergo retransmission combining from said buffer means and inputting these packets of data to said combining means if result of the comparison is that the conditions of the propagation path at the time of retransmission are superior;
wherein said combining means combines and outputs a plurality of portions of retransmission packet data prevailing after punctured decoding and corresponding ones of data of a plurality of packets that have been extracted from said buffer means.

12. A packet transmitting apparatus in a communication system for transmitting a packet signal upon changing over a parameter of a transmit signal in accordance with conditions of a propagation path, and, when the packet signal cannot be received correctly on a receiving side, retransmitting the packet signal, combining the packet data received previously and the retransmitted packet data and executing decode processing based upon the combined packet data, said apparatus comprising:
buffer means for storing a transmitted packet with identifying information and a modulation parameter appended thereto;
means for deciding a modulation parameter based upon conditions of the propagation path; and
retransmitting means for deleting a packet, for which successful reception has been sent back from a receiving side, from said buffer means, and retransmitting a packet, for which reception failure has been sent back from the receiving side, upon attaching identifying information and a modulation parameter prevailing at time of retransmission, with the retransmission being performed based upon a modulation scheme that conforms to this modulation parameter.

13. The apparatus according to claim 12, further comprising:
means for comparing a modulation parameter that has been attached to packet data to be retransmitted and a modulation parameter conforming to the conditions of the propagation path prevailing at the time of retransmission; and
means for retransmitting a plurality of packets, which have been stored in said buffer means, as a single retransmission packet signal upon attaching respective ones of identifying information of these packets if result of the comparison is that the conditions of the propagation path at the time of retransmission are superior to those that prevailed at the time of the previous transmission.

14. The apparatus according to claim 12, further comprising:
means for comparing a modulation parameter that has been attached to packet data to be retransmitted and a modulation parameter conforming to the conditions of the propagation path prevailing at the time of retransmission; and
means for retransmitting part of a packet, which has been stored in said buffer means, as a single retransmission packet signal upon attaching identifying information if result of the comparison is that the conditions of the propagation path at the time of retransmission are inferior to those that prevailed at the time of the previous transmission.
